Europäisches Patentamt

European Patent Office

Office européen des brevets

(11) Publication number: **0 201 642**
**B1**

(12) **EUROPEAN PATENT SPECIFICATION**

(45) Date of publication of patent specification: **11.04.90**

(51) Int. Cl.⁵: **F 16 C 17/12**

(21) Application number: **85306718.9**

(22) Date of filing: **20.09.85**

(54) **Foil thrust bearings.**

(30) Priority: **01.10.84 US 656398**

(43) Date of publication of application:
**20.11.86 Bulletin 86/47**

(45) Publication of the grant of the patent:
**11.04.90 Bulletin 90/15**

(84) Designated Contracting States:
**CH DE FR GB IT LI SE**

(56) References cited:
**FR-A-2 458 707**
**US-A-3 495 886**
**US-A-3 635 534**
**US-A-4 223 958**
**US-A-4 227 753**

(73) Proprietor: **ALLIED-SIGNAL INC. (a Delaware corporation)**
**Columbia Road and Park Avenue P.O. Box 2245R**
**Morristown New Jersey 07960 (US)**

(72) Inventor: **Saville, Marshall P.**
**15309 Yukon Avenue**
**Lawndale California 90260 (US)**
Inventor: **Gu, Alston Lee-Van**
**5832 Sunmist Drive**
**Rancho Palos Verdes California 90274 (US)**

(74) Representative: **Rees, David Christopher et al**
**Kilburn & Strode 30 John Street**
**London WC1N 2DD (GB)**

Courier Press, Leamington Spa, England.

## Description

Process fluid or gas bearings are now being utilised in an increasing number of diverse applications. These fluid bearings generally comprise two relatively movable elements with a predetermined spacing therebetween filled with a fluid such as air, which, under dynamic conditions, forms a supporting wedge sufficient to prevent contact between the two relatively movable elements.

More recently, improved fluid bearings, particularly gas bearings of the hydrodynamic type, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally, these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid-film-lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary externally to pressurize the fluid between the bearing surfaces to increase the load carrying capability. While these externally pressurized or hydrostatic fluid bearings do increase the load carrying capacity, they do introduce the requirement for an external source of clean fluid under pressure.

In order properly to position the compliant foils between the relatively movable bearing elements a number of mounting means have been devised. In thrust bearings, it is conventional practice to mount a plurality of individually spaced foils on a foil bearing disc such as by spot welds and position the foil bearing disc on one of the bearing elements as exemplified in U.S. Patent No. 3,635,534, disclosing the features as outlined in the first part of claim 1.

To establish stability of the foils in most of these mounting means, a substantial pre-load is required on the foil. That is, the individual foils must be loaded against the relatively movable bearing element opposed to the bearing element upon which the foils are mounted. It has been conventional to provide separate compliant stiffener elements or underfoils beneath the foils to supply this required preload as exemplified in U.S. Patent Nos. 3,893,733 and 4,153,315.

In order to facilitate start-up and to reduce bearing wear, the individual foils may be coated with a high lubricity material such as a stratified fluorocarbon, molybdenum disulfide, graphite fluoride, or the like. The use of such coatings, while enhancing the life of the foil bearing, introduces certain operating temperature limitations thereon. As still higher temperature environments are envisaged for foil bearing operation, the temperature limitations of these coatings become critical since they cannot survive as high a temperature as the underlying metallic foil. Thus, higher temperature coatings must be developed or means found to limit the operating temperature at the coated foil surfaces. Examples of prior cooling schemes for foil bearings can be found in U.S. Patent Nos. 4,227,753 and 4,247,155.

As more widespread use is made of foil bearings, the ease and cost of manufacturing and assembly become of more concern. Simple construction with greater ease of manufacture and shorter axial heat conduction paths is needed. Examples of recent attempts in this direction can be found in U.S. Patent No. 3,747,997 and 3,809,443.

According to one aspect of the present invention as outlined in claim 1 a fluid thrust bearing assembly comprises first and second members arranged for relative rotation with respect to one another, a thrust member being operably disposed between the first and second members and being mounted on said first member, the thrust member having a number of compliant foils each of which has an operative face which inclines to a radial plane and which defines between it and the second member a generally wedge-shaped space for bearing fluid and the direction of relative rotation of the first and second members being towards the narrower ends of said wedge shaped spaces and is characterised in that the compliant foils are integrally formed with the thrust member, the thrust member comprises a ring having an external peripheral edge, and an internal peripheral edge surrounding a central aperture of the ring, and the foils are integrally formed from the material of the ring by bending each foil out of the plane of the remainder of the ring along a bend line which extends substantially radially of the ring.

Other aspects of the present invention are disclosed in the subclaims.

The invention may be carried into practice in various ways but certain specific embodiments will now be described, by way of example, with reference to the accompanying drawings, in which:

Figure 1 is an exploded perspective view of one embodiment of a foil thrust bearing according to the present invention;

Figure 2 is an enlarged plan view of the bearing disc of the foil thrust bearing of Figure 1;

Figure 3 is a side elevation of part of the bearing disc of Figure 2 viewed along the line 3—3 thereof;

Figure 4 is an enlarged view of a second embodiment of a bearing disc according to the present invention;

Figure 5 is a side elevation of part of the bearing disc of Figure 4 viewed along the line 5—5 thereof;

Figures 6 and 7 are similar views of a further embodiment of bearing disc according to the present invention;

Figures 8 and 9 are similar views of a further embodiment of bearing disc according to the present invention;

Figure 10 is an enlarged plan view of another embodiment of thrust disc according to the present invention;

Figure 11 is a cross-sectional view of the thrust disc of Figure 10 taken along the line 11—11 thereof;

Figure 12 is a top plan view of the underspring of the foil thrust bearing of Figure 1;

Figure 13 is a side elevation of part of the underspring of Figure 12 as viewed along the line 13—13 thereof, and

Figure 14 is a bottom plan view of the underspring of Figures 12 and 13.

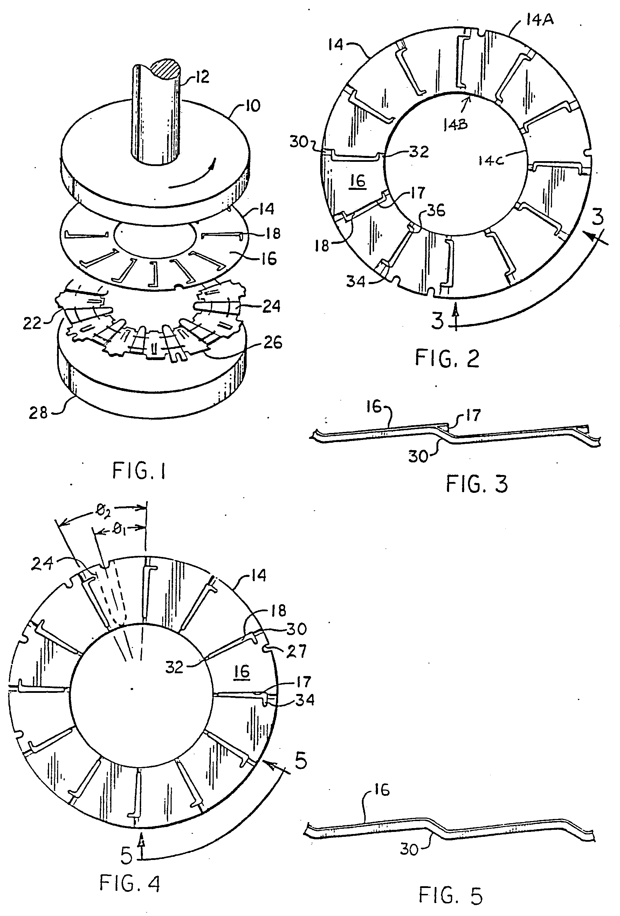

Figures 1 to 3 illustrate a first embodiment of a thrust bearing of the present invention. As illustrated in Figure 1, a thrust runner 10 including shaft 12 is rotatably supported on a thrust plate 28 by means of a thrust bearing ring or disc 14 and a thrust bearing stiffener or underspring 22. The thrust bearing ring or disc 14 includes a plurality of integral bearing pads or foils 16. The thrust bearing underspring 22 includes a plurality of generally radially upper ridges 24 and lower ridges 26 alternately disposed thereon to provide preload and support for the thrust bearing disc 14.

As more fully shown in Figures 2 and 3, the thrust bearing disc 14 has an external periphery 14A and a central aperture 14B defined by an internal periphery 14C and comprises a plurality of thin compliant surface pads or foils 16 formed by and separated by radially extending slots 18. Each of these slots 18 is generally U-shaped having an outer leg 34 and an inner leg 36. Ramps 30 and 32 extend respectively between the outer leg 34 of the slot 18 and the outer periphery of the thrust bearing disc 14, and the inner leg 36 of the slot 18 and the inner periphery of the thrust bearing disc 14, around its central aperture. The ramps 30 and 32 are generally defined by radial lines, as seen in plan. The thrust bearing disc 14 thus provides alternate surface foils 16 and surface ramps 30 and 32. As shown in Figure 3, the foils 16 subtend a shallow angle to a radial plane. The thrust runner 10, which rotates above the foils, will, in practice, rotate in the direction of the arrow shown in Figure 1. This direction of rotary movement of the thrust manner is effectively to the right in Figure 3. Thus the foils 16 converge towards the underside of the thrust runner, in the direction of rotation of the latter so forming wedge-shaped spaces between the foils and the runner 10.

In contrast, the ramps 30 and 32 slope in the opposite direction, and quite steeply. Thus the ramps effectively diverge from the undersurface of the thrust runner, in the direction of rotation of the latter. With the generally U-shaped slot 18 extending between the ramps 30 and 32, the effective trailing edge 17 of the foil 16 continues to converge towards the thrust runner 10, as most clearly illustrated in Figure 3.

Figures 4 and 5 illustrate an alternate embodiment of the thrust bearing disc in which the slots 18 are generally L-shaped, having only an outer leg 34, but no inner leg 36. In addition, the ramps 30 and 32 are generally radially aligned with the slot in the embodiment of Figures 4 and 5. Alternately, the outer leg 34 of the slot 18 may be eliminated to leave a straight radial slot.

Also illustrated in Figure 4 is the relative position of the upper ridges 24 of the underspring 22 with respect to the foil 16 of the thrust bearing disc 14. The angle $\theta_1$ is defined between the radial line extending from the base of the ramps 30 and 32 (the leading edge of the foil 16) and the radial centreline of the upper ridge 24. The angle $\theta_2$ is defined between the leading edge of the foil 16 and the trailing edge 17 of the foil 16. In order to provide the proper preload and support for the individual foils 16, the ratio of the angles $\theta_1$ and $\theta_2$ shoud be approximately 2:3 to provide optimum results in most operating conditions. It should be understood, however, that the ratio between $0_1$ and $0_2$ range can be from approximately 1:2 to almost 1:1. The relationship between $0_1$ and $0_2$ should, however, never be less than 1:2.

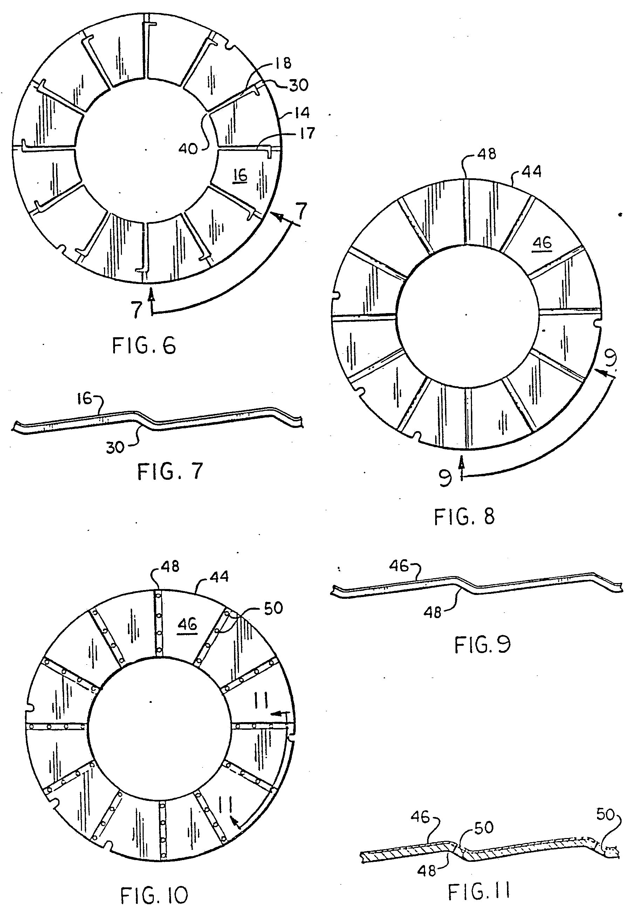

Another alternate embodiment of foil thrust disc 14 is illustrated in Figures 6 and 7. In this arrangement the L-shaped slot 18 opens directly to the inner periphery of the thrust bearing disc 14, and thus includes only a single outer ramp 30. The opening of the slot 18 at the inner periphery of the disc 14 is generally shown by numeral 40. As with the embodiment of Figures 4 and 5, a straight radial slot can be utilised in this embodiment also.

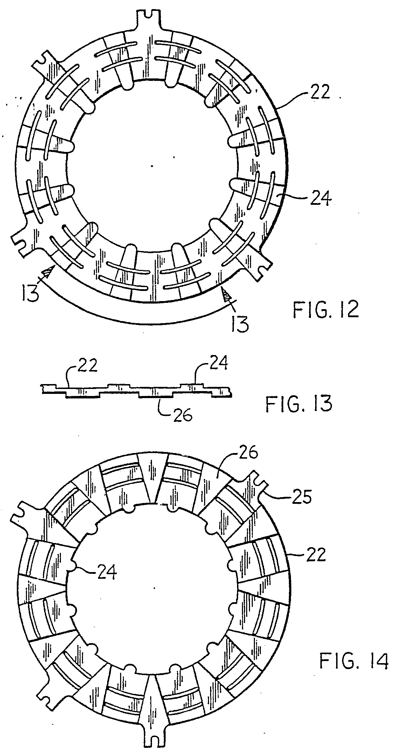

Figures 8 to 11 illustrate two alternate embodiments in which the thrust bearing disc 44 includes a plurality of foils 46 separated by ramps 48 which radially extend across the entire disc 44. In the embodiment of Figures 10 and 11 the ramps 48 include a plurality of cooling holes 50.

Figures 12 to 14 illustrate the underspring 22 utilised in the foil thrust bearing of this invention. Besides the upper ridges 24 and lower ridges 26, also shown are projections 25 which can be utilised to maintain the position of the underspring 22 with respect to the thrust plate 28. Similar cutouts 27 (see Figure 4) may be provided on the thrust bearing disc 14 for the same purpose.

As with conventional foil bearings, the bearing surface of the individual foils may be coated with a high lubricity material. The slots in the individual thrust bearing discs may be formed by photochemical machining or mechanical punching or some other similar process. The ramps can be produced by stamping or other similar mechanical techniques.

Since a portion of the heat generated in the hydrodynamic bearing film due to discous dissipation is conducted away through the foils and the disc, the integration of the foils and the disc provides a shorter heat conduction path as compared with individual foils mounted upon a separate disc. The simplicity in design will also provide ease in fabrication and thus lower cost, while still maintaining high bearing performance.

With respect to the embodiments of Figures 2 and 3 and Figures 4 and 5, it should be recognised that both of these embodiments may include only the ramps 30 at the outer periphery with no ramps at the inner periphery. Furthermore, there may be applications where the angle of divergence with respect to the underside of the thrust runner 10 and/or the length of the inner ramps 32 of these embodiments (and thus the ramp height) may vary from the angle of divergence and/or the length of the outer ramps 30. In some instances the outer ramp 30 may be eliminated altogether with only the inner ramp 32 remaining. Likewise, the angle of divergence and/or the length of the ramps in the embodiments of Figures 8 and 9 and Figures 10 and 11 can be varied in the radial direction.

The actual angle of divergence and height of the diverging ramps will be varied to provide for particular operating conditions. The integral foil thrust disc can provide a higher bearing load capacity than prior arrangements since there is a greater extent of converging surface facing the thrust runner 10 which generates the hydrodynamic pressure to support the thrust runner 10. The surface of the converging foils can be relatively flat or have a slight crown depending upon the desired operating characteristics. The height of the individual ramps would normally be between 0.00127 cm (0.0005 ins) to 0.0254 cm (0.010 ins) with a range of 0.00254 to 0.00508 cm preferred. The thrust bearing disc illustrated in Figures 6 and 7 would be thicker than the thrust bearing disc of Figures 2 and 3 to compensate for the loss of stiffness as a result of the opening 40. Likewise, the number of individual foils in a particular thrust bearing disc can be varied considerably depending upon the operating conditions in which the thrust bearing disc is to be utilised.

## Claims

1. A fluid thrust bearing assembly comprising first and second members (28, 10) arranged for relative rotation with respect to one another, a thrust member (14) being operably disposed between the first and second members and being mounted on said first member (28), the thrust member (14) having a number of compliant foils (16, 46) each of which has an operative face which inclines to a radial plane and which defines between it and the second member (10) a generally wedge-shaped space for bearing fluid, and the direction of relative rotation of the first and second members being towards the narrower ends of said wedge shaped spaces, characterised in that the compliant foils (16, 46) are integrally formed with the thrust member (14), the thrust member (14) comprises a ring having an external peripheral edge (14A), and an internal peripheral edge (14C) surrounding a central aperture (14B) of the ring, and the foils (16, 46) are formed from the material of the ring by bending each foil out of the plane of the remainder of the ring along a bend line which extends substantially radially of the ring.

2. An assembly as claimed in Claim 1 characterised in that the foils are each bounded by a pair of generally radial lines, one of which extends along an edge of the foil which is cut from the remainder of the ring by means of a generally radial slot (18) formed in the ring.

3. An assembly as claimed in claim 2 characterised in that each generally radial slot merges at one or each end thereof into a circumferentially extending closed-ended slot (34, 36).

4. An assembly as claimed in claim 2 characterised in that the generally radial slot (18) is closed at its radially inner and its radially outer ends.

5. An assembly as claimed in claim 2 characterised in that the generally radial slot is open at one of its radially inner and radially outer ends (40).

6. An assembly as claimed in claim 3 characterised in that the (or each) end of the slot which is closed is bounded by a ramped, circumferentially extending, ring portion (30, 32), which defines a ramp surface facing the second member and inclined to the face thereof in a direction which slopes oppositely to the direction of inclination of the operative face of the foil.

7. An assembly as claimed in claim 1 characterised in that each adjacent pair of foils is interconnected by a radially extending ramp (48) which is inclined to the face of the second member in a direction which slopes oppositely to the direction of inclination of the operative face of the foils.

8. An assembly as claimed in any preceding claim and provided with a foil stiffener member (22) located between the thrust member (14) and the first member (28), characterised in that the foil stiffener member has a plurality of circumferentially alternating upper (24) and lower (26) generally radial ridges.

9. An assembly as claimed in claim 8 characterised in that a first angle generally subtended between the edges of a foil respectively nearest and furthest from the second member is defind as $\theta_2$, and the angle subtended between the edge of the foil closest to the second member and a generally radial line extending through the centre of the upper ridge (24) is defined as $\theta_1$, and the ratio of $\theta_1$ to $\theta_2$ is between 1:2 and 1:1 and is preferably substantially 2:3.

10. An assembly as claimed in any preceding claim characterised in that each compliant foil (16) extends from the bend line towards the adjacent face of the second member (10), the foil having an edge at the narrower end of said wedge-shaped space.

## Patentansprüche

1. Fluiddrucklageranordnung mit ersten und zweiten Bauteilen (28, 10), die relativ zueinander drehbar angeordnet sind, einem Druckbauteil (14), das zwischen den ersten und zweiten Bauteilen wirkend angeordnet und auf dem ersten Bauteil (28) befestigt ist, und das eine Anzahl von nachgiebigen Folien (16, 46) aufweist, deren jede eine Wirkfläche besitzt, die gegen eine radiale Ebene geneigt ist und die zwischen sich und dem zweiten Bauteil (10) einen etwa keilförmigen Raum für das Lagerfluid festlegt, wobei die Richtung der relativen Drehung der ersten und zweiten Bauteile auf die schmaleren Enden der keilförmigen Räume zu gerichtet ist, dadurch gekennzeichnet, daß die nachgiebigen Folien (16, 46) einstückig mit dem Druckbauteil (14) ausgebildet sind, daß das Druckbauteil (14) einen Ring mit einer äußeren Umfangskante (14A) und einer inneren Umfangskante (14C), die eine zentrische Öffnung (14B) des Ringes umgibt, aufweist, und daß die Folien (16, 46) aus dem Material des Ringes gebildet sind, indem jede Folie aus der Ebene des verbleibenden Teils des Ringes längs einer Biegelinie geboden wird, die sich im wesentlichen radial zum Ring erstreckt.

2. Anordnung nach Anspruch 1, dadurch gekennzeichnet, daß die Folien jeweils durch ein Paar von etwa radialen Linien begrenzt sind, von denen eine sich längs einer Kante der Folie erstreckt, die aus dem übrigen Teil des Ringes mit Hilfe eines etwa radialen, im Ring ausgebildeten Schlitzes (18) geschnitten ist.

3. Anordnung nach Anspruch 2, dadurch gekennzeichnet, daß jeder radiale Schlitz an einem oder beiden Enden in einen in Umfangsrichtung verlaufenden Schlitz (34, 36) mit geschlossenem Ende übergeht.

4. Anordnung nach Anspruch 2, dadurch gekennzeichnet, daß der radiale Schlitz (18) an seinem radial inneren und radial äußeren Ende geschlossen ist.

5. Anordnung nach Anspruch 2, dadurch gekennzeichnet, daß der radiale Schlitz am einen der radial inneren und radial äußeren Enden (40) offen ist.

6. Anordnung nach Anspruch 3, dadurch gekennzeichnet, daß das (oder jedes) Ende des gechlossenen Schlitzes durch einen rampenförmigen, in Umfangsrichtung verlaufenden Ringteil (30, 32) begrenzt ist, der eine Rampenfläche festlegt, die dem zweiten Bauteil zugewandt ist und die zu dessen Stirnfläche in einer Richtung geneigt ist, die entgegengesetzt zur Richtung der Neigung der Wirkfläche der Folie schräg angeordnet ist.

7. Anordnung nach Anspruch 1, dadurch gekennzeichnet, daß jedes benachbarte Paar von Folien durch eine radial verlaufende Rampe (48) verbunden ist, die zur Stirnfläche des zweiten Bauteiles in einer Richtung geneigt ist, die entgegengesetzt zur Richtung der Neigung der Wirkfläche der Folien schräg angeordnet ist.

8. Anordnung nach einem der vorausgehenden Ansprüche, mit einem Folienversteifungsbauteil (22), das zwischen dem Druckbauteil (14) und dem ersten Bauteil (28) angeordnet ist, dadurch gekennzeichnet, daß das Folienversteifungsbauteil eine Vielzahl von in Umfangsrichtung miteinander abwechselnden oberen (24) und unteren (26) etwa radialen Kämmen aufweist.

9. Anordnung nach Anspruch 8, dadurch gekennzeichnet, daß ein erster Winkel, der zwischen den Rändern einer Folie, die zum zweiten Bauteil am nächsten und am weitesten liegen, eingeschlossen ist, mit $O_2$ bezeichnet ist, daß der Winkel, der zwischen dem Rand der Folie, der dem zweiten Bauteil am nächsten liegt, und einer etwa radialen Linie, die durch den Mittelpunkt des oberen Kammes (24) geht, eingeschlossen ist, mit $O_1$ definiert ist, und daß das Verhältnis von $O_1$ zu $O_2$ zwischen 1:2 und 1:1, vorzugsweise etwa 2:3, beträgt.

10. Anordnung nach einem der vorausgehenden Ansprüche, dadurch gekennzeichnet, daß jede nachgiebige Folie (16) sich von der gebogenen Linie gegen die benachbarte Stirnfläche des zweiten Bauteiles (10) erstreckt, wobei die Folie einen Rand an dem schmaleren Ende des keilförmigen Raumes hat.

## Revendications

1. Ensemble palier de pression fluidique comprenant un premier et un deuxième éléments (28, 10), disposés pour permettre une rotation relative l'un par rapport à l'autre, un élément de poussée (14) étant disposé en fonctionnement entre les premier et deuxième éléments et étant monté sur ledit premier élément (28), l'élément de poussée (14) comportant plusieurs lames souples (16, 46), dont chacune a une face active qui est inclinée vers un plan radial et qui définit, entre elle et le deuxième élément (10), un espace dont la forme générale est celle d'un coin, pour le fluide du palier, le sens de la rotation relative des premier et deuxième éléments étant en direction des extrémités étroites desdits espaces en forme de coin, caractérisé en ce que les lames souples (16, 46) sont réalisées d'une seule pièce avec l'élément de poussée (14), l'élément de poussée (14) comprenant un anneau présentant un bord (14A) périphérique extérieur, et un bord (14C) périphérique intérieur, entourant un orifice central (14B) de l'anneau, et en ce que les lames (16, 46) sont formées à partir du matériau de l'anneau, par cintrage en dehors du plan du reste de l'anneau le long d'une ligne de cintrage qui s'étend sensiblement radialement de l'anneau.

2. Ensemble selon la revendication 1, caractérisé en ce que chacune des lames est délimitée par une paire de lignes généralement radiales, dont l'une s'étend le long d'un bord de la lame qui est détachée du reste de la bague au moyen d'une fente (18) généralement radiale, pratiquée dans l'anneau.

3. Ensemble selon la revendication 2, caractérisé en ce que chaque fente généralement radiale débouche par au moins une de ses extrémités dans une fente (34, 36) circonférentielle, fermée à ses extrémités.

4. Ensemble selon la revendication 2, caractérisé en ce que la fente (18) généralement radiale est fermée à ses extrémités radialement intérieure et radialement extérieure.

5. Ensemble selon la revendication 2, caractérisé en ce que la fente généralement radiale est ouverte sur l'une de ses extrémités (40) radialement intérieure et radialement extérieure.

6. Ensemble selon la revendication 3, caractérisé en ce que l'extrémité (ou chaque extrémité) de la fente qui est fermée, est délimitée par une partie d'anneau (30, 32) en déclivité, s'étendant circonférentiellement, qui définit une surface en déclivité en regard du deuxième élément et est inclinée vers la face de cet élément dans une direction dont la pente est opposée au sens d'inclinaison de la face active de la lame.

7. Ensemble selon la revendication 1, caractérisé en ce que chaque paire adjacente de lames est interconnectée par une déclivité (48) s'étendant radialement qui est inclinée vers la face du deuxième élément dans une direction dont la pente est opposée au sens d'inclinaison de la face active des lames.

8. Ensemble selon l'une quelconque des revendications précédentes, et pourvu d'un élément (22) raidiseur de lame, placé entre l'élément de poussée (14) et le premier élément (28), caractérisé en ce que l'élément raidisseur de lame a une pluralité de nervures généralement radiales supérieures (24) et inférieures (26) alternant sur la circonférence.

9. Ensemble selon la revendication 8, caractérisé en ce qu'un premier angle, généralement sous-tendu entre les bords d'une lame, respectivement le plus proche et le plus éloigné du deuxième élément, est défini par $\theta_2$, et en ce que l'angle sous-tendu entre le bord de la lame le plus proche du deuxième élément et une ligne généralement radiale passant par le centre de la nervure supérieure (24) est défini par $\theta_1$, et en ce que le rapport de $\theta_1$ sur $\theta_2$ est comprise entre 1:2 et 1:1 et de préférence, est sensiblement 2:3.

10. Ensemble selon l'une quelconque des revendications précédentes, caractérisé en ce que chaque lame souple (16) s'étend à partir de la ligne de cintrage en direction de la face adjacente du deuxième élément (10), la lame présentant un bord à l'extrémité étroite dudit espace en forme de coin.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14